# EUROPÄISCHE PATENTSCHRIFT

(11) **EP 2 239 376 B1**
(45) Veröffentlichungstag und Bekanntmachung des Hinweises auf die Patenterteilung: **21.08.2013**
(21) Anmeldenummer: 10003685.4
(22) Anmeldetag: 03.04.2010
(51) Int. Cl.: E02D 27/42, F03D 1/00, F03D 11/04

(54) **Verankerungsbauteil für einen Windenergieanlagenturm**
Anchoring component for a wind farm tower
Composant d'ancrage pour une tour de parc d'éoliennes

(30) Priorität: 08.04.2009 DE 102009016893
(43) Veröffentlichungstag der Anmeldung: 13.10.2010
(73) Patentinhaber: Nordex Energy GmbH, 22848 Norderstedt (DE)
(72) Erfinder: Jakubowski, Alexander, 46236 Bottrop (DE)
(74) Vertreter: Hauck Patent- und Rechtsanwälte

(56) Entgegenhaltungen:
- EP-A2- 2 009 202
- WO-A1-2005/015013
- DE-B3- 10 230 273

## Beschreibung

Die Erfindung betrifft ein Verankerungsbauteil für einen Windenergieanlagenturm zur Verbindung mit einem unteren Turmabschnitt aus einem Betonwerkstoff und mit einem oberen Turmabschnitt aus Stahl.

Windenergieanlagentürme mit Turmabschnitten aus unterschiedlichen Materialien werden auch als Hybridtürme bezeichnet. Der untere Turmabschnitt aus Beton wird aus einem Betonwerkstoff hergestellt. Es können vorgefertigte Betonfertigteile auf der Baustelle zusammengefügt werden oder der Betonturmabschnitt kann vollständig auf der Baustelle durch Gießen hergestellt werden (Ortbeton). Der Turmabschnitt aus Stahl kann aus mehreren röhrenförmigen Turmsektionen bestehen, wobei die einzelnen Turmsektionen einstückig gefertigt oder aus mehreren über den Umfang der Sektion verteilten Elementen zusammengefügt sein können.

Besondere Schwierigkeiten ergeben sich bei der Verbindung des Turmabschnitts aus Stahl mit dem Turmabschnitt aus Beton. Hier treffen unterschiedliche Werkstoffe aufeinander, die mit höchster Festigkeit verbunden werden müssen und die hochdynamischen Belastungen ausgesetzt sind.

Zur Verbindung der beiden Turmabschnitte ist aus DE 603 11 894 T2 bekannt, einen Endbereich des Turmabschnitts aus Stahl in den Turmabschnitt aus dem Betonwerkstoff einzulassen. Der eingelassene Endbereich weist Verankerungselemente auf, die den Halt in dem Turmabschnitt verbessern sollen.

Aus DE 20 2006 009 554 U1 ist ein spezielles Adapterelement aus Stahl bekannt, das mit dem Turmabschnitt aus Beton vergossen wird. Das Adapterelement ist im Wesentlichen ringförmig ausgeführt und umschließt das obere Ende des Turmabschnitts aus Beton. An der Oberseite des Adapterelements wird eine röhrenförmige Turmsektion aus Stahl über eine Flanschverbindung befestigt.

Ein anderes ringförmiges Adapterelement ist aus DE 102 30 273 B3 bekannt. Dieses ist ebenfalls ringförmig und wird an seinem oberen Ende über eine Flanschverbindung mit einer röhrenförmigen Turmsektion aus Stahl verbunden. Der unterhalb des Adapters angeordnete Turmabschnitt besteht aus Spannbeton, wobei Spannglieder im inneren der Wandung des unteren Turmabschnitts verlaufen und durch Verbindungsbohrungen des Adapterelements hindurchgeführt sind. Oberhalb des Adapterelements sind die Spannglieder verankert, so dass sie das Adapterelement fest mit den Turmabschnitt aus Beton verspannen.

Bei der aus DE 10 2007 031 065 A1 bekannten Lösung weist der Turmabschnitt aus Beton einen Kopfabschnitt mit schräg angeordneten Durchgangsbohrungen auf. Durch diese Durchgangsbohrungen werden Ankerbolzen hindurchgeführt, die unterhalb des Kopfabschnitts mit einer Mutter fixiert werden können. Die Ankerbolzen sind weiterhin durch Bohrungen in einem Flansch des oberen Turmabschnitts aus Stahl hindurchgeführt und oberhalb dieses Flansches ebenfalls mit einer Mutter befestigt. Diese bekannte Lösung erlaubt einen Austausch der Ankerbolzen, ist jedoch konstruktiv aufwendig und erfordert einen raumgreifenden Kopfabschnitt.

Aus der Offenlegungsschrift DE 23 041 32 ist eine Befestigungsvorrichtung für Maschinen an Fundamenten bekannt. Die bekannte Befestigungsvorrichtung weist eine Verankerungshülse auf, die in den Beton des Fundaments eingegossen wird, wobei ein Schutzrohr beim Gießen des Betons eine Bohrung für einen aufzunehmenden Dehnungsanker freihält.

Aus der Offenlegungsschrift DE 20 39 263 ist eine Ankerhülse für Betonfertigteile bekannt, bei der zwei Hülsen zur Befestigung eines Hebezeugelements in den Beton eingegossen und mit dem Hebezeug verbunden sind.

Weiter zeigt WO2005015013A ein Verankerungsbauteil entsprechend dem Oberbegriff des Anspruch 1.

Davon ausgehend ist es die Aufgabe der Erfindung, ein Verankerungsbauteil für einen Windenergieanlagenturm zur Verbindung mit einem unteren Turmabschnitt aus Beton und mit einem oberen Turmabschnitt aus Stahl zur Verfügung zu stellen, das die hohen Festigkeitsanforderungen erfüllt, kompakt aufgebaut ist und die Errichtung des Turms vereinfacht.

Diese Aufgabe wird gelöst durch das Verankerungsbauteil für einen Windenergieanlagenturm mit den Merkmalen des Anspruchs 1. Vorteilhafte Ausgestaltungen sind in den sich anschließenden Unteransprüchen angegeben. Das Verankerungsbauteil ist ring- oder ringsegmentförmig und aus einem Betonwerkstoff vorgefertigt. Es weist zur Verbindung mit einem unteren Turmabschnitt aus Beton mindestens ein vorstehendes Bewehrungselement und zur lösbaren Verbindung mit einem oberen Turmabschnitt aus Stahl mindestens eine Bohrung zur Aufnahme eines Ankerbolzens auf, in der eine Ankerhülse mit einem Innengewinde zum Einschrauben des Ankerbolzens angeordnet ist.

Das Verankerungsbauteil ist am oberen Ende des Turmabschnitts aus dem Betonwerkstoff angeordnet. Das ringförmige Verankerungsbauteil kann einen kreisrunden oder vieleckigen Querschnitt aufweisen. Ein ringsegmentförmiges Verankerungsbauteil kann entsprechend ein Segment eines solchen Querschnitts bilden. Über das vorstehende Bewehrungselement wird das Verankerungsbauteil fest mit dem unteren Turmabschnitt verbunden. Hierzu wird vorzugsweise das Bewehrungselement an eine Bewehrung des unteren Turmabschnitts angeschlossen.

Die Verbindung zu dem vorzugsweise oberhalb des Verankerungsbauteils angeordneten oberen Turmabschnitt aus Stahl wird über die Ankerbolzen hergestellt. Diese können in die in dem Verankerungsbauteil festgelegte Ankerhülse eingeschraubt werden. Sie können daher auch nach Fertigstellung des unteren Turmabschnitts aus Beton eingesetzt und jederzeit ausgetauscht werden. Die Ankerhülse kann beispielsweise bei der Herstellung des Verankerungsbauteils in dieses eingegossen und dadurch fest darin verankert werden. Anders als bei der aus dem Stand der Technik bekannten Lösung ist es nicht erforderlich, den Ankerbolzen so durch den Kopfabschnitt bzw. das Verankerungsbauteil hindurch zu führen, dass das untere Ende zur Fixierung mit Hilfe einer Mutter zugänglich ist. Dies ermöglicht eine Anordnung der Ankerbolzen parallel zu einer Außen- und/oder Innenfläche des Turmabschnitts aus dem Betonwerkstoff. Das Verankerungsbauteil kann daher besonders kompakt ausgeführt werden. Insbesondere können seine Abmessungen so an den Querschnitt des Turmabschnitts aus dem Betonwerkstoff angepasst werden, dass an der Turmaußen- und/oder Innenseite ein bündiger Übergang erreicht wird.

Weitere Vorteile bietet die Vorfertigung des Verankerungsbauteils aus einem Betonwerkstoff. Insbesondere vereinfacht sich die Ausrichtung des Verankerungssystems auf der Baustelle. Anders als bei einem speziellen Kopfabschnitt, der auf der Baustelle gegossen wird, kann die präzise Ausrichtung der Bohrungen für die Ankerbolzen relativ zu einander bereits vor der Errichtung des Turms sichergestellt werden. Auf der Baustelle muss lediglich das gesamte Verankerungsbauteil in die richtige Position gebracht werden. Dies ist einfach durch entsprechenden Anschluss der Bewehrungselemente an die Bewehrung des unteren Turmabschnitts möglich. Ein weiterer Vorteil ist, dass bei der Herstellung des Verankerungsbauteils unabhängig von der Wahl des Betonwerkstoffs für den unteren Turmabschnitt ein Betonwerkstoff mit besonders hoher Druckfestigkeit gewählt werden kann. Dadurch vereinfacht sich die Verbindung zu dem Turmabschnitt aus Stahl, wobei unter Umständen auf ein Lastverteilblech verzichtet werden kann.

In einer Ausgestaltung ist das Verankerungsbauteil ringsegmentförmig und mit mindestens einem weiteren oder beispielsweise zwei, drei oder mehr insbesondere identisch geformten, ringsegmentförmigen Verankerungsbauteilen zu einem geschlossenen Ring verbindbar. Die miteinander verbundenen Segmente bilden gemeinsam ein ringförmiges Verankerungsbauteil. Die Verbindung der ringsegmentförmigen Verankerungsbauteile kann bevorzugt über eine Nut- und Federverbindung erfolgen.

In einer Ausgestaltung steht das mindestens eine Bewehrungselement nach unten aus dem Verankerungsbauteil vor. Grundsätzlich kann es auch seitlich aus dem Verankerungsbauteil herausragen und in diesem Bereich in dem Turmabschnitt aus Beton verankert werden. Ein Anschluss der Bewehrung unterhalb des Verankerungsbauteils ermöglicht jedoch einen besonders kompakten Aufbau.

In einer Ausgestaltung besteht jedes Bewehrungselement aus einem Paar von Stahlstäben. Die aus dem Verankerungsbauteil herausragenden Enden der Stahlstäbe können abgewinkelt sein, um den Anschluss an die Bewehrung des Betonturmabschnitts zu vereinfachen und eine festere Verankerung zu erreichen. Zur Verbindung mit der Bewehrung des Betonturmabschnitts können die Bewehrungselemente auch andere Formen aufweisen, beispielsweise gerade Stäbe, Haken, Bügel oder vergleichbare Formen.

Gemäß einer Ausgestaltung ist das mindestens eine Bewehrungselement ein U-förmiger Stahlbügel, dessen freie Enden aus dem Verankerungsbauteil vorstehen. Dann ist der mittlere Abschnitt des U-förmigen Stahlbügels in das Verankerungsbauteil eingegossen und darin besonders fest verankert. Die freien Enden des U-förmigen Stahlbügels können insbesondere die bereits erläuterten unterschiedlichen Formen aufweisen, um den Anschluss an die Bewehrung des Betonturmabschnitts zu vereinfachen.

Gemäß einer Ausgestaltung weist das Verankerungsbauteil eine Vielzahl von gleichmäßig in Umfangsrichtung verteilten Bewehrungselementen auf. Dadurch wird eine gleichmäßige Krafteinleitung in den Betonturmabschnitt erreicht.

In einer Ausgestaltung verlaufen die Bohrungen zur Aufnahme der Ankerbolzen in Axialrichtung des Verankerungsbauteils. Diese Richtungsangabe bezieht sich ebenso wie die folgenden Richtungsangaben stets auf ein ringförmiges Verankerungsbauteil. Bei einem ringsegmentförmigen Verankerungsbauteil beziehen sich die Richtungsangaben entsprechend auf einen in Gedanken vervollständigten Ring. Bei einem zylindrischen Ring können die Ankerbolzen exakt in Axialrichtung angeordnet sein. Bei einem entsprechend dem Turmabschnitt aus Beton leicht konisch ausgebildeten Ring kann auch entsprechend dem Neigungswinkel des Konus von der Axialrichtung abgewichen werden. In beiden Fällen ermöglicht die Ausrichtung der Ankerbolzen eine besonders feste Verankerung bei gleichzeitig kompakten Aufbau des Verankerungsbauteils.

Zwecks gleichmäßiger Lastverteilung und Krafteinleitung sind die Bohrungen bevorzugt gleichmäßig in Umfangsrichtung über das Verankerungsbauteil verteilt angeordnet.

In einer weiteren Ausgestaltung sind die Bohrungen auf zwei radial beabstandeten Kreisen bzw. Kreissegmenten angeordnet. Diese Anordnung ermöglicht eine besonders feste Verbindung insbesondere zu einem entsprechend breit ausgeführten Flansch am Turmabschnitt aus Stahl. Der Flansch kann T-förmig mit jeweils einer Reihe von Bohrungen auf jeder Seite der Turmwandung ausgeführt sein.

Gemäß einer Ausgestaltung ist in der mindestens einen Bohrung zur Aufnahme des Ankerbolzens ein Hüllrohr aus Kunststoff angeordnet, das den Ankerbolzen aufnimmt und sich von der Ankerhülse ausgehend durch die Bohrung erstreckt. Das Hüllrohr stellt beim Gießen des Verankerungsbauteils sicher, dass die Bohrung wie gewünscht angeordnet ist und dass das Innengewinde der Ankerhülse frei bleibt. Außerdem verhindert es einen unmittelbaren Kontakt des Ankerbolzens mit dem Beton.

In einer Ausgestaltung weist das Verankerungsbauteil mindestens eine zusätzliche Bohrung zur Aufnahme eines Spannglieds für den unteren Turmabschnitt aus einem Betonwerkstoff auf. Mit Hilfe des Spannglieds kann der Turmabschnitt aus Beton gegebenenfalls bereits vor Verbindung mit dem Turmabschnitt aus Stahl verspannt werden. Die Fertigstellung des Betonturmabschnitts wird dadurch von der Verfügbarkeit und der Montage des Turmabschnitts aus Stahl entkoppelt.

Gemäß einer Ausgestaltung ist ein Lastverteilblech aus Stahl vorhanden, das oberhalb des Verankerungsbauteils angeordnet und mit Bohrungen versehen ist, die den Bohrungen im Verankerungsbauteil entsprechen. Das Lastverteilblech kann auf der Baustelle oder bereits bei der Vorfertigung des Verankerungsbauteils auf diesem angeordnet werden. Es bewirkt eine gleichmäßige Druckbelastung des Verankerungsbauteils.

Gemäß einer Ausgestaltung ist die mindestens eine Ankerhülse an einer unteren Fläche des Verankerungsbauteils angeordnet. Bei dieser Anordnung ergibt sich eine maximale Auszugsfestigkeit.

In einer Ausgestaltung weist die mindestens eine Ankerhülse eine Innengewindehülse und eine mit der Innengewindehülse verbundene Scheibe auf. Die Scheibe kann fest mit der Innengewindehülse verbunden sein, etwa durch Schweißen, oder einstückig gefertigt sein. Auch ein Andrehen der Scheibe an die Innengewindehülse ist möglich.

Die Erfindung wird nachfolgend anhand eines in zwei Figuren dargestellten Ausführungsbeispiels näher erläutert. Es zeigen:
- Fig. 1: einen Querschnitt durch ein mit einem Turmabschnitt aus Beton oder einem Turmabschnitt aus Stahl verbundenes Verankerungs- bauteil nach der Erfindung;
- Fig. 2: die Ankerhülse aus Fig. 1 in einer vergrößerten Darstellung.

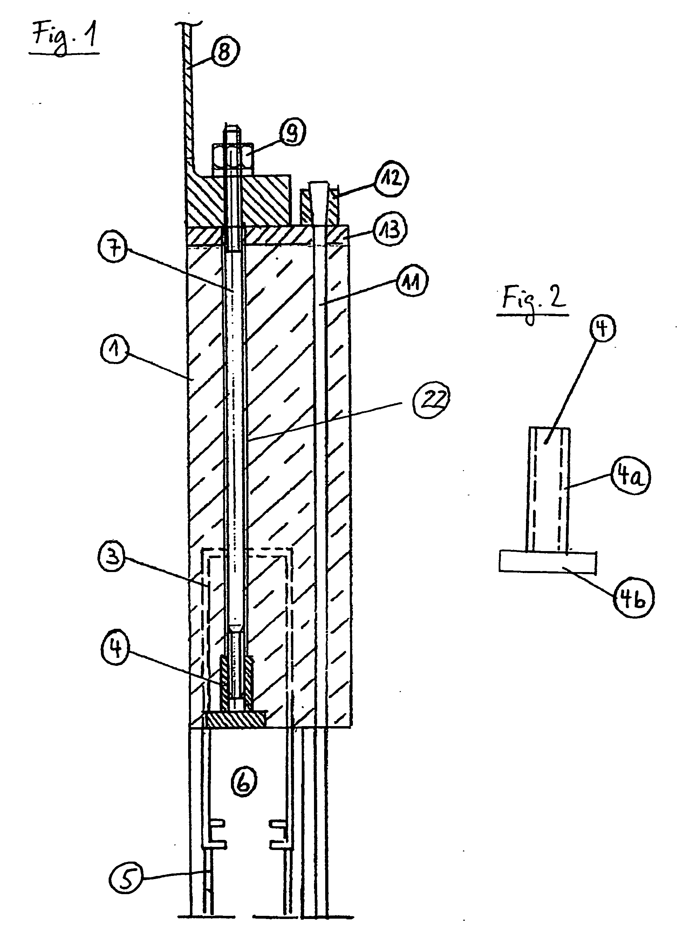

Das Verankerungsbauteil 1 aus Fig. 1 ist aus einem Betonwerkstoff vorgefertigt. Es ist ein Ringsegment in Form einer Zylinderschale. Es kann auch eine Halb- oder Viertelschale verwendet werden.

Das Verankerungsbauteil 1 weist eine Vielzahl von gleichmäßig über den Umfang verteilten, in Axialrichtung ausgerichteten Bohrungen zur Aufnahme eines Ankerbolzens 7 auf. Die Bohrungen erstrecken sich über die gesamte Höhe des Verankerungsbauteils 1. Am unteren Ende des Verankerungsbauteils ist eine Ankerhülse 4 angeordnet. Das untere Ende der Ankerhülse wird von einer Scheibe gebildet, deren unteres Ende bündig mit der unteren Fläche des Betonrings abschließt. Die Ankerhülse 4 weist zudem eine Innengewindehülse auf, in die der Ankerbolzen 7 eingeschraubt ist. Die Ankerhülse 4 ist fest in den Betonring eingegossen. Vom oberen Ende der Innengewindehülse der Ankerhülse 4 erstreckt sich ein Kunststoffhüllrohr 22, das bis zum oberen Ende des Betonrings verläuft und die Bohrung sowie die Innengewindehülse beim Gießen des Betonwerkstoffs freihält.

Das Verankerungsbauteil 1 weist eine Vielzahl von U-förmigen Bewehrungselementen 3 auf, deren freie Enden abgewinkelt sind und nach unten aus dem Verankerungsbauteil 1 hervorstehen. Die freien Enden der Bewehrungselemente 3 sind mit einer Bewehrung 5 des Turmabschnitts 6 aus einem Betonwerkstoff, der unterhalb des Verankerungsbauteils 1 angeordnet ist, verbunden. Der untere Turmabschnitt 6 besteht aus Ortbeton und wird bei seiner Errichtung fest mit dem Verankerungsbauteil 1 vergossen.

Das Verankerungsbauteil 1 weist weitere gleichmäßig über seinen Umfang verteilte Bohrungen auf, die radial innerhalb der Bohrungen für die Ankerbolzen 7 angeordnet sind, ebenfalls in Axialrichtung verlaufen und der Aufnahme von Spanngliedern 11 dienen. Mit den Spanngliedern 11 wird der Turmabschnitt 6 aus Beton einschließlich des Verankerungsbauteils 1 vorgespannt.

Oberhalb des Verankerungsbauteils 1 ist ein Lastverteilblech 13 aus Stahl angeordnet, das mit einer Vielzahl von Bohrungen versehen ist, deren Anordnung den Bohrungen im Verankerungsbauteil 1 entspricht, so dass die Ankerbolzen 7 und die Spannglieder 11 durch das Lastverteilblech 13 hindurchgeführt werden können. Die Spannglieder 11 sind oberhalb des Lastverteilblechs 13 in einem Spannglied-Ankerkopf 12 verankert.

Der oberhalb des Verankerungsbauteils 1 und des Lastverteilblechs 13 angeordnete Turmabschnitt 8 aus Stahl weist einen L-förmigen, radial nach innen weisenden Flansch auf. Dieser ist mit den Bohrungen im Verankerungsbauteil 1 entsprechenden Bohrungen versehen, durch die die Ankerbolzen 7 hindurchgeführt sind. Oberhalb des Flansches sind die Ankerbolzen 7 mit einer Unterlegscheibe und einer Mutter 9 befestigt, so dass sie den Flansch des Turmabschnitts 8 aus Stahl mit dem Verankerungsbauteil 1 verspannen.

In der Fig. 2 erkennt man den Aufbau der Ankerhülse 4 aus einer Innengewindehülse 4a und einer Scheibe 4b, die mit der Innengewindehülse 4a verbunden ist.

## Patentansprüche

1. Verankerungsbauteil (1) fiir einen Windenergieanlagenturm, das ring- oder ringsegmentförmig und aus einem Betonwerkstoff vorgefertigt ist, **dadurch gekennzeichnet, daß** es zur Verbindung mit einem unteren Turmabschnitt (6) aus einem Betonwerkstoff mindestens ein vorstehendes Bewehrungselement (3) und zur lösbaren Verbindung mit einem oberen Turmabschnitt (8) aus Stahl mindestens eine Bohrung zur Aufnahme eines Ankerbolzens (7) aufweist, in der eine Ankerhülse (4) mit einem Innengewinde zum Einschrauben des Ankerbolzens (7) angeordnet ist.

2. Verankerungsbauteil (1) nach Anspruch 1, **dadurch gekennzeichnet, dass** es ringsegmentförmig ist und mit mindestens einem weiteren ringsegmentformigen Verankerungsbauteil (1) zu einem geschlossenen Ring verbindbar ist.

3. Verankerungsbauteil (1) nach Anspruch 2, **dadurch gekennzeichnet, dass** es eine Nut und eine Feder zur Verbindung mit weiteren ringsegmentformigen Verankerungsbauteilen (1) zu einem geschlossenen Ring aufweist.

4. Verankerungsbauteil (1) nach einem der Ansprüche 1 bis 3, **dadurch gekennzeichnet, dass** das mindestens eine Bewehrungselement (3) nach unten aus dem Verankerungsbauteil (1) vorsteht.

5. Verankerungsbauteil (1) nach einem der Ansprüche 1 bis 4, **dadurch gekennzeichnet, dass** das mindestens eine Bewehrungselement (3) aus einem Paar von Stahlstäben besteht.

6. Verankerungsbauteil (1) nach einem der Ansprüche 1 bis 5, **dadurch gekennzeichnet, dass** das mindestens eine Bewehrungselement (3) ein Uförmiger Stahlbügel ist, dessen freie Enden aus dem Verankerungsbauteil (1) vorstehen.

7. Verankerungsbauteil (1) nach einem der Ansprüche 1 bis 6, **dadurch gekennzeichnet, dass** es eine Vielzahl von gleichmäßig in Umfangsrichtung verteilten Bewehrungselementen (3) aufweist.

8. Verankerungsbauteil (1) nach einem der Ansprüche 1 bis 7, **dadurch gekennzeichnet, dass** die Bohrungen zur Aufnahme der Ankerbolzen (7) in Axialrichtung des Verankerungsbauteils (1) verlaufen.

9. Verankerungsbauteil (1) nach einem der Ansprüche 1 bis 8, **dadurch gekennzeichnet, dass** die Bohrungen gleichmäßig in Umfangsrichtung über das Verankerungsbauteil (1) verteilt angeordnet sind.

10. Verankerungsbauteil (1) nach einem der Ansprüche 1 bis 9, **dadurch gekennzeichnet, dass** die Bohrungen auf zwei radial beabstandeten Kreisen bzw. Kreissegmenten angeordnet sind.

11. Verankerungsbauteil (1) nach einem der Ansprüche 1 bis 10, **dadurch gekennzeichnet, dass** in der mindestens einen Bohrung zur Aufnahme des Ankerbolzens (7) ein Hüllrohr (22) aus Kunststoff angeordnet ist, das den Ankerbolzen (7) aufnimmt und sich von der Ankerhülse (4) ausgehend durch die Bohrung erstreckt.

12. Verankerungsbauteil (1) nach einem der Ansprüche 1 bis 11, **dadurch gekennzeichnet, dass** es mindestens eine zusätzliche Bohrung zur Aufnahme eines Spannglieds (11) für den unteren Turmabschnitt (6) aus einem Betonwerkstoff aufweist.

13. Verankerungsbauteil (1) nach einem der Ansprüche 1 bis 12, **dadurch gekennzeichnet, dass** ein Lastverteilblech (13) aus Stahl vorhanden ist, das oberhalb des Verankerungsbauteils (1) angeordnet und mit Bohrungen versehen ist, die den Bohrungen im Verankerungsbauteil (1) entsprechen.

14. Verankerungsbauteil (1) nach einem der Ansprüche 1 bis 13, **dadurch gekennzeichnet, dass** die mindestens eine Ankerhülse (4) an einer unteren Fläche des Verankerungsbauteils (1) angeordnet ist.

15. Verankerungsbauteil (1) nach einem der Ansprüche 1 bis 14, **dadurch gekennzeichnet, dass** die mindestens eine Ankerhülse (4) eine Innengewindehülse (4a) und eine mit der Innengewindehülse (4a) verbundene Scheibe (4b) aufweist.

## Claims

1. An anchoring component (1) for a wind turbine tower, which is ring- or ring segment-shaped and prefabricated from a concrete material, **characterised in that** it comprises at least one projecting reinforcement element (3) for connecting with a lower tower portion (6) made of a concrete material and at least one bore for receiving an anchor bolt (7) for detachably connecting with an upper tower portion (8) made of steel, an anchor sleeve (4) with an internal thread for screwing in the anchor bolt (7) being arranged in said bore.

2. The anchoring component (1) according to claim 1, **characterised in that** it is ring segment-shaped and adapted to be connected with at least one further ring segment-shaped anchoring component (1) so as to form a closed ring.

3. The anchoring component (1) according to claim 2, **characterised in that** it comprises a groove and a tongue for connecting with further ring segment-shaped anchoring components (1) so as to form a closed ring.

4. The anchoring component (1) according to any one of claims 1 to 3, **characterised in that** the at least one reinforcement element (3) projects downwards from the anchoring component (1).

5. The anchoring component (1) according to any one of claims 1 to 4, **characterised in that** the at least one reinforcement element (3) consists of a pair of steel rods.

6. The anchoring component (1) according to any one of claims 1 to 5, **characterised in that** the at least one reinforcement element (3) is a U-shaped steel hoop, whose free ends project from the anchoring component (1).

7. The anchoring component (1) according to any one of claims 1 to 6, **characterised in that** it has a plurality of reinforcement elements (3) evenly distributed in the circumferential direction.

8. The anchoring component (1) according to any one of claims 1 to 7, **characterised in that** the bores for receiving the anchor bolts (7) run in the axial direction of the anchoring component (1).

9. The anchoring component (1) according to any one of claims 1 to 8, **characterised in that** the bores are distributed evenly over the anchoring component (1) in the circumferential direction.

10. The anchoring component (1) according to any one of claims 1 to 9, **characterised in that** the bores are arranged on two radially spaced circles or segments of a circle, respectively.

11. The anchoring component (1) according to any one of claims 1 to 10, **characterised in that** a sheath (22) made of plastics is arranged in the at least one bore for receiving the anchor bolt (7), which receives the anchor bolt (7) and which extends along the bore starting from the anchor sleeve (4).

12. The anchoring component (1) according to any one of claims 1 to 11, **characterised in that** it comprises at least one additional bore for receiving a pre-stressing element (11) for the lower tower portion (6) made of a concrete material.

13. The anchoring component (1) according to any one of claims 1 to 12, **characterised in that** a load distribution plate (13) made of steel is provided, which is arranged above the anchoring component (1) and which comprises bores that correspond to the bores in the anchoring component (1).

14. The anchoring component (1) according to any one of claims 1 to 13, **characterised in that** the at least one anchor sleeve (4) is arranged at a lower face of the anchoring component (1).

15. The anchoring component (1) according to any one of claims 1 to 14, **characterised in that** the at least one anchor sleeve (4) comprises an internally threaded sleeve (4a) and a disc (4b) connected to the internally threaded sleeve (4a).

## Revendications

1. Composant d'ancrage (1) pour une tour d'éolienne qui a une forme annulaire ou de segment annulaire et est préfabriqué en matériau béton, **caractérisé en ce qu'**il comporte en vue de la liaison avec une section de tour inférieure (6) en matériau béton au moins un élément d'armature saillant (3) et pour la liaison amovible avec une section de tour supérieure (8) en acier au moins un alésage pour le logement d'un boulon d'ancrage (7), dans lequel est agencé une douille d'ancrage (4) avec un taraudage pour le vissage du boulon d'ancrage (7).

2. Composant d'ancrage (1) selon la revendication 1, **caractérisé en ce qu'**il a une forme de segment annulaire et peut être relié à au moins un autre composant d'ancrage (1) en forme de segment annulaire pour former un anneau fermé.

3. Composant d'ancrage (1) selon la revendication 2, **caractérisé en ce qu'**il comporte une rainure et une languette pour la liaison avec d'autres composants d'ancrage (1) en forme de segment annulaire pour former un anneau fermé.

4. Composant d'ancrage (1) selon une des revendications 1 à 3, **caractérisé en ce que** le au moins un élément d'armature (3) dépasse vers le bas depuis le composant d'ancrage (1).

5. Composant d'ancrage (1) selon une des revendications 1 à 4, **caractérisé en ce que** le au moins un élément d'armature (3) est constitué d'une paire de barres d'acier.

6. Composant d'ancrage (1) selon une des revendications 1 à 5, **caractérisé en ce que** le au moins un élément d'armature (3) est un étrier en acier en forme de U dont les extrémités libres dépassent du composant d'ancrage (1).

7. Composant d'ancrage (1) selon une des revendications 1 à 6, **caractérisé en ce qu'**il comporte une pluralité d'éléments d'armature (3) répartis régulièrement dans le sens circonférentiel.

8. Composant d'ancrage (1) selon une des revendications 1 à 7, **caractérisé en ce que** les alésages pour le logement des boulons d'ancrage (7) s'étendent dans le sens axial du composant d'ancrage (1) .

9. Composant d'ancrage (1) selon une des revendications 1 à 8, **caractérisé en ce que** les alésages sont disposés régulièrement dans le sens circonférentiel en étant répartis sur le composant d'ancrage (1) .

10. Composant d'ancrage (1) selon une des revendications 1 à 9, **caractérisé en ce que** les alésages sont disposés sur deux cercles et/ou segments circulaires espacés radialement.

11. Composant d'ancrage (1) selon une des revendications 1 à 10, **caractérisé en ce que** dans ledit au moins un alésage pour le logement du boulon d'ancrage (7) est disposé un tube de gainage (22) en matière plastique qui reçoit le boulon d'ancrage (7) et s'étend en partant de la douille d'ancrage (4) à travers l'alésage.

12. Composant d'ancrage (1) selon une des revendications 1 à 11, **caractérisé en ce qu'**il comporte au moins un alésage supplémentaire pour le logement d'un élément de serrage (11) pour la section de tour inférieure (6) en matériau béton.

13. Composant d'ancrage (1) selon une des revendications 1 à 12, **caractérisé en ce qu'**une tôle de répartition de charge (13) en acier est présente, laquelle est disposée au-dessus du composant d'ancrage (1) et est munie d'alésages qui correspondent aux alésages dans le composant d'ancrage (1).

14. Composant d'ancrage (1) selon une des revendications 1 à 13, **caractérisé en ce que** la au moins une douille d'ancrage (4) est agencée sur une surface inférieure du composant d'ancrage (1).

15. Composant d'ancrage (1) selon une des revendications 1 à 14, **caractérisé en ce que** la au moins une douille d'ancrage (4) comporte une douille à filetage intérieur (4a) et une rondelle plate (4b) reliée à la douille à filetage intérieur (4a).
